**Europäisches Patentamt**

(19) **European Patent Office**

**Office européen des brevets**

(11) Publication number: **0 177 237**

**A1**

(12) # EUROPEAN PATENT APPLICATION

(21) Application number: **85306745.2**

(22) Date of filing: **23.09.85**

(51) Int. Cl.⁴: **B 62 J 9/00**

(30) Priority: **21.09.84 GB 8423977**

(43) Date of publication of application:
**09.04.86 Bulletin 86/15**

(84) Designated Contracting States:
**BE DE FR IT NL**

(71) Applicant: **TI RALEIGH INDUSTRIES LIMITED**
**Triumph Road**
**Nottingham NG7 2DD(GB)**

(72) Inventor: **Peat, Keven**
**6 St. Helen's Crecent**
**Trowell Nottingham(GB)**

(72) Inventor: **Whittle, Roger**
**6 Cherwell Court**
**Hempshill Vale Nottingham NG6 8WG(GB)**

(74) Representative: **Funge, Harry et al,**
**WILSON, GUNN & ELLIS 41-51 Royal Exchange Cross**
**Street**
**Manchester M2 7BD(GB)**

(54) **Instrument console for a pedal cycle.**

(57) The invention proposes a console (30) in or for a pedal cycle which comprises a housing (40) for location between the seat and head tubes (12, 13) of the cycle and having a plurality of compartments each to receive an accessory, in modular form, into captive engagement therein. The housing (40) is of cranked configuration to provide a forwardly and upwardly extending front portion which overlies the handlebars (17) of the cycle and positions a display module or modules in the line of sight of the rider.

FIG.2

## INSTRUMENT CONSOLE FOR A PEDAL CYCLE

The present invention relates to pedal cycles and in particular to the provision of a console to receive and support accessories at a position on the cycle of ready accessibility/visibility.

According to the present invention, a console positionable so as to extend between the seat tube and head tube of a pedal cycle comprises an elongate housing, a plurality of outwardly open compartments in the said housing arranged captively to receive a respective module or housing cover into engagement therewith, and a respective module located in selected ones of the said compartments. Preferably, the housing includes mutually inclined front and rear portions and comprises separate upper and lower mouldings, the lower moulding defining a downwardly facing channel.

According to a further preferred feature, the housing and the modules/housing covers include cooperable formations thereon for the captive engagement of the modules/housing covers relative to the housing, the said cooperable formations comprising complementary ribs and grooves extending in the longitudinal direction of the housing.

The invention also includes a pedal cycle including a console as aforesaid.

Traditionally the frame will be of tubular construction, having a main frame member on which is mounted a seat tube to support the saddle and a head tube through which the handlebars are pivotally supported. The console will conveniently be mounted between the upper portions of the seat and head tubes and may be mounted on a top tube secured to and extending between the seat and head tubes, if provided. Ordinarily the console will extend from the seat tube to overlie the head-tube, but it is to be understood that the console may be of such dimensions and so positioned on the frame as to terminate short of either or both of the respective axes of the seat and head tubes. Similar consoles may be provided on tubular or non-tubular frames of non-conventional design. Furthermore, instead of being mounted on a frame member, the console itself may form a structural element of the frame, for example replacing the top tube of the frame.

The console and the frame members with which it interfits may be shaped accordingly. For example, where the console is mounted on the top tube of a conventional tubular diamond framed bicycle, the console may be arranged to straddle the top tube and the latter may be shaped for example of oval section, in order to provide space in the console for the accessories etc. which it is designed to house.

Any convenient manner may be used to mount the console between the saddle and handlebars. Preferably the method of mounting will include resilient packings and mounting blocks, so that tolerance variations may be accommodated and rattles and vibrations avoided.

The console may be provided with locking means by which the accessory modules/housing covers may be secured to the console housing.

The accessory modules may include speed/trip computers, audible warning sound generators, radios, light controls, gear indicators etc.  Provision may also be made for the storage of batteries and other items, one of the outwardly open compartments being used for this purpose if desired, and for the accommodation of associated wiring; control cables etc.

An embodiment of the present invention is now described with reference to the accompanying drawings in which : -

Fig. 1 illustrates the general arrangement of a pedal cycle formed in accordance with the present invention;

Fig. 2 shows a sectional elevation of the console shown in Fig. 1; and

Fig. 3 shows a section along the line III III of the console shown in Fig. 2.

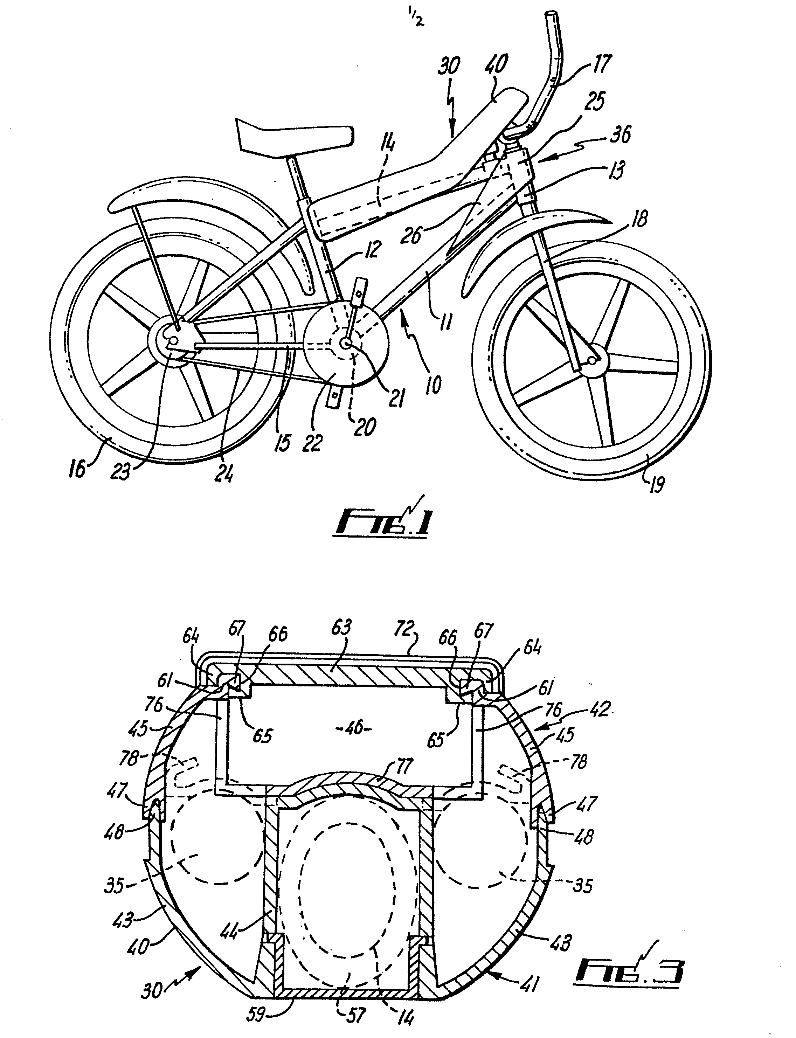

The pedal cycle illustrated in Fig. 1 is of basically conventional design, having a frame 10 formed from a main frame tube 11, seat tube 12, head tube 13 and top tube 14. A pair of rear forks 15 extend rearwardly from the seat tube 12 and serve as a support for the rear wheel 16 and the handle bar 17/front fork 18/front wheel 19 assembly is pivotally mounted in suitable bearings in the head tube 13.  A bearing assembly 20 is provided at the junction of the main frame tube 11, seat tube 12 and rear forks 15 for the pedal crank axle 21 and a chain wheel 22 which is mounted on the pedal crank axle 21 is connected to a drive sprocket 23 on the rear wheel 16 by means of chain 24.

A console 30 for accessories is mounted on the top tube 14, so that it extends from the seat tube 12 to a point adjacent but spaced above the head tube 13, so as to provide clearance for movement of the handlebars 17 which are pivotally mounted in the head tube 13. The console 30 will typically contain; distance/speed computer 31; radio 32; an audible warning sound generator 33; light controls 34; and also serve as a storage for batteries 35 to power the various accessories. A loud speaker for the radio 32 and audible warning sound generator 33 is located in a subsidiary housing 36 which is mounted between the head tube 13 and main frame tube 11. A loud speaker for the radio 32 and audible warning sound generator 33 is located in a subsidiary housing 36 which is mounted between the head tube 13 and main frame tube 11. The subsidiary housing 36 for the speaker may conveniently be formed as a one-piece moulding, a central portion 25 of which is wrapped about the head tube 13 so that the side portions 26 extend along the main frame tube 11 and may be secured to a suitable bracket thereon. The speaker may then be sandwiched between the two side portions 26, suitable formations being provided on the side portions 26 for location of the speaker. Resilient pads may also be provided between the speaker and one or both side portions 26 to securely retain the speaker in position and prevent it from rattling against the housing 36.

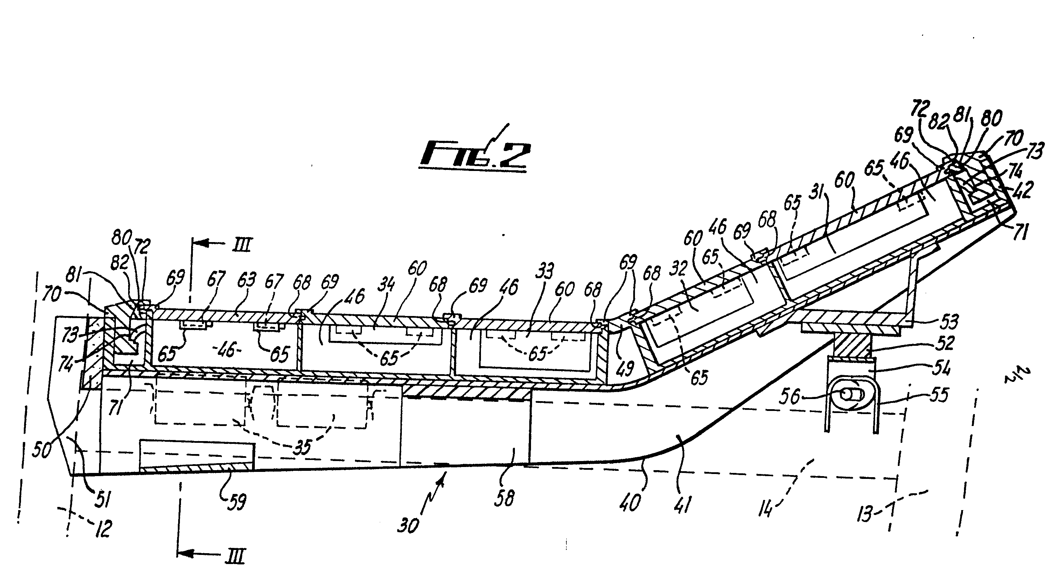

As illustrated in greater detail in Figs. 2 and 3, the console 30 comprises a housing 40, the rearward part of which lies substantially parallel to the top tube 14, while the forward portion is inclined upwardly to bring it clear of the handlebars 17 and also to provide a better viewing angle for visual displays.

The housing 40 is formed from two mouldings 41, 42, which are secured together in a suitable manner. The lower moulding 41 defines a pair of lower outer wall portions 43 which are separated by downwardly opening channel section 44 which will accommodate the top tube 14 of the cycle frame 10, so that the console housing 40 may straddle the top tube 14. The top tube 14 is of oval section in order to maximise the space in the housing 40 either side of the channel section 44. The upper moulding 42 defines a pair of upper wall portions 45 and a plurality of open topped compartments 46. The upper and lower wall portions 45, 43 are provided with marginal formations 47, 48 respectively which will interengage to provide a closed seam, when the mouldings 41, 42 are secured together. The compartments 46 in the upper mouldings 42 are divided into two groups, one group in the rearward portion of the housing 40 that is substantially parallel to the top tube 14 and the other group in the forward inclined portion of the housing 40. The two groups of compartments 46 are separated by a closedtop portion 49.

A resilient foam moulding 50 is secured to the rear end of the housing 40, this moulding 50 being provided with a vertical, part cylindrical recess 51, so that the moulding 50 may engage partially about the seat tube 12. A rubber mounting block 52 is mounted, by means of brackets 53, in the channel section 44 of the inclined forward portion of the lower moulding 41. The rubber block 52 is provided with a lower coupling member 54 by means of which it may be secured to a bracket 55 on the top tube 14. To secure the console housing 40 to the cycle, the housing 40 is pushed rearwardly so that the moulding 50 is compressed against the seat tube 12, the coupling member 54 is then clamped to the bracket 55 by means of a clamping bolt 56. In this manner the housing 40 will be resiliently clamped between the seat tube 12 and rubber mounting block 52. Further resilient packing 57, 58 is provided between the top tube 14 and the housing 40, in the channel section 44 thereof and a retaining plate 59 which clamps into the housing 40 to close the channel section 44 at the rearward end thereof, secures the console housing 40 against vertical movement at that end.

The various accessories 31 to 34 whch may be accommodated in the console 30 are in modular form and are arranged to locate in one of the open topped compartments 46 defined by the upper moulding 42 of the housing 40. Each module is provided with a cover 60 which engages longitudinal lips 61 on either side of the compartments 46 to close the compartment. At locations where no module is to be fitted, a housing cover or closure member 63 similar to the module covers 60, may be provided to close the compartment 46.

The module covers 60 and closure members 63 are provided with longitudinal edge portions 64 which will engage over the lips 61 on either side of the compartments 46. Each cover 60 or closure member 63 is provided with a pair of spaced formations 65 along each longitudinal edge, these formations defining an outwardly opening groove 66. Formation 67, corresponding to the grooves 66 are provided on the lip 61 on either side of the compartments 46. One end of the cover 60 or closure member 63 is provided with a tongue formation 68 while the other end is provided with a corresponding groove formation 69. In this manner, the modules 31 to 34 or a closure member 63 may be placed on top of one of the compartments 46, so that the edge portion 64 of the cover 60 or closure member 63 engages a lip 61, but the formations 65, 67 are misaligned longitudinally. The modules 31 to 34 or closure member 63 may then be slid along the compartment 46 until the formation 67 on the lips 61 engage in the grooves 66 on the formations 65, and the tongue formation 68 at the end of the cover 60 or closure member 63 engages in the groove 69 at the end of the adjacent cover 60 or closure member 63, or in a corresponding groove 69 in the closed topped portion 49 between the groups of compartments 46. Locking plates 70 are provided at the free end of each group of compartments 46. These locking plates 70 engaging in apertures 71 at each end of the console housing 40 and having a lip 72 which overlies the end of the adjacent module cover 60 or closure member 63. Each locking plate 70 also engages a resiliently mounted knib 80 which is formed integrally of the upper moulding 42. An inclined surface 81 on the knib 80 engages a correspondingly inclined surface 82 on the locking plate 70, so that as the locking plate 70 is inserted into the aperture 71 the knib 80 is forced towards the adjacent cover 60 or closure member 63. In this manner the knib 80 is forced into engagement with the groove 69 in the adjacent cover 60 or closure member 63 and pushes one cover 60 or closure member 63 against the next and the row of covers 60 and/or closure members 63 against the groove 69 in the closed top portion 49 of the housing 40. Any tolerance variations in the covers 60 and/or closure members 63 are thereby taken up so that the covers 60 and/or closure members 63 are securely locked to one another and to the housing 40 and rattles therebetween are avoided. The locking plates 70 are retained in position by resilient detents 73 which engage in a recess portion 74 of the locking plate 70. Keys are provided which may be inserted into the locking plate 70 to press the detents 73 and permit the removal of locking plate 70, when it is desired to remove one of the modules 31 to 34 or the closure members 63.

Batteries 35 to power the various accessories are housed in the lower part of the console housing 40 although it may be found convenient, in some instances, to provide a respective battery in and for a particular module. In order to provide access for the batteries 35 the side wall 76 and part of the base 77 of the compartment 46 are cut away. Resilient plastic clips 78 are provided to retain the batteries 35 in position. Provision is also made for the wiring required to connect various accessories and also for the control cable and the like.

In the console 30 above described the accessories 31 to 34 mounted in the console housing 40 and the positioning of the accessories may be varied as required. In this particular example, the distance/speed computer 31, which through a pick-up on the front wheel 19 provides a digital read out of the speed or distance, is positioned in the foremost compartment 46 of the console housing 40, so that the display can be seen without diverting too much attention from the road ahead. This computer 31 which may be provided with its own power source to maintain continuous operation even in the event that the other accessories are switched off by a master switch or the like, may also be arranged to provide other functions, for example the time and journey time etc. The various functions are controlled by one or more push button switches.

The radio module 32 has a plurality of pre-set channels which may be tuned in, in sequence, by means of a single push button switch. Other push button switches are provided for an on/off control and to select one of a plurality of pre-set volume levels. The radio module 32 may be provided with its own amplifier although conveniently it may share the amplifier used for the audible warning sound generator 33.

The audible warning sound generator 33 comprises a computer which is programmed to play one of eight different tunes. The tunes may be selected in sequence using a single push button selector switch. In order to identify the tune selected, the tunes are divided into two groups of four; for the first group, each tune is identified by one to four bursts of a single tone at low frequency while for the second group each tune is identified by one to four bursts of a single tone at high frequency. The sound generator is

- 10 -

actuated to play the selected tune by means of a switch which may be located on the console 30 or on the handlebars 17.

Module 34 provides the on/off control for the cycle lights.

In order to avoid attention being diverted from the road while the various accessories are being switched, each control may be linked to the sound generator so as to give an audible indication of the control operated or function selected, in a similar manner to the identification system used on the sound generator.

Various modifications may be made without departing from the invention. For example, other forms of accessory may be included in addition to or as replacement for those described above. While in the embodiment described above the batteries 36 are positioned in the lower part of the console housing 40, if space permits, batteries may alternatively or in addition be housed in one or more of the compartments 46. Also in the above description the controls for the various accessories have been described as push buttons. However, any suitable form of switch may be used, although it is desirable that the switches should be such that operation thereof can be achieved without diverting too much attention from the road. Furthermore, switches such as membrane switches which provide a smooth surface, important from a safety aspect, and which are completely weatherproof, are particularly suitable.

CLAIMS

1.     A console positionable so as to extend between the seat tube (12) and head tube (13) of a pedal cycle, the said console comprising an elongate housing (30), a plurality of outwardly open compartments (46) in the said housing arranged captively to receive a respective module or housing cover (60,63) into engagement therewith, and a respective module (31/60 to 34/60) located in selected ones of the said compartments (46).

2.     A console as claimed in claim 1, wherein the housing includes mutually inclined front and rear portions.

3.     A console as claimed in claim 1 or 2, wherein the housing comprises separate upper and lower mouldings (41,42), the lower moulding (42) defining a downwardly facing channel.

4.     A console as claimed in claim 3, wherein the lower moulding (42) is of elongate W-profile when viewed in transverse cross-section.

5.     A console as claimed in claim 3 or 4, wherein the said plurality of outwardly open compartments (46) is provided in the upper moulding (41).

6.     A console as claimed in any one of claims 2 to 5, wherein the said plurality of compartments (46) is provided as two groups of compartments, provided in the front and rear portions respectively of the housing, said two groups being separated by a closed top portion (49) of the housing.

7.     A console as claimed in any one of the preceding claims, including cooperable formation (66,67) on the housing and modules for the captive engagement of each module with a respective compartment, the said cooperable formations comprising complementary ribs and grooves respectively provided on the housing and module, and extending in the longitudinal direction of the housing, a plurality of cooperable formations (66,67) being provided at each of two opposing edges of the module and at corresponding positions on the housing, the individual elements of each plurality of cooperable formations being arranged in spaced apart disposition longitudinally of such edges.

8.     A console as claimed in any one of the preceding claims, wherein the front and rear edges respectively of the modules and of any housing covers include complementary tongue and groove formations (68,69).

9.     A console as claimed in claim 12, wherein the housing includes cavities (71) at the forward and rearward ends thereof, each captively to receive a respective locking plate (70) into engagement therewith, said locking plates (70) extending outwardly from the respective cavities to overly the adjacent edge of the extreme module/housing cover, there being a respective resiliently mounted knib (80) between each locking plate (70) and the adjacent module/housing cover edge.

10. A console as claimed in claim 6, or in claim 8 or 9 when dependent thereon, wherein the forward and rearward edges of the closed top portion (49) of the housing are shaped to receive the edge of an adjacent module/housing cover (60,63) into engagement therewith.

11. A console as claimed in any one of the preceding claims, wherein the rearward end of the housing (30) includes a profiled, resilient moulding (50) for engagement with the seat tube (12) of a bicycle.

12. A console as claimed in claim 2 or in any one of claims 3 to 11 when dependent thereon, including attachment means (52-54) depending from the underside of the housing approximately centrally of the front portion thereof and further including an attachment clip (59) at the underside of the housing in the rear portion thereof.

13. A pedal cycle including a console as claimed in any one of the preceding claims.

14. A pedal cycle as claimed in claim 13, wherein the cycle includes a seat tube (12), a head tube (13) arranged in generally parallel spaced-apart disposition relative to the seat tube and a top tube (14) connecting said seat and head tubes, the console (30) extending from a position adjacent the seat tube (12) to the region of the head tube (13), and the forward end of the console being raised relative to the top tube (14) and being supported thereon.

-14-

15.    A pedal cycle as claimed in claim 14, further including a speaker housing mounted between the head tube and a main frame tube of the cycle.

16.    A pedal cycle as claimed in claim 13, wherein the console defines a structural part of the frame thereof.

FIG.1

FIG.3

Fig.2

European Patent
Office

**EUROPEAN SEARCH REPORT**

0177237
Application number

EP 85 30 6745

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 248 970 (HEISE)<br>* Figures 1,2; page 2, lines 31-40; pages 3,4 * | 1 | B 62 J 9/00 |
| A | FR-A-2 506 250 (SHIMANO)<br>* Figures 1-3; page 2, lines 33-37; pages 3-6 * | 1 | |
| A | FR-A-2 494 659 (SHIMANO)<br>* Figures 1-9; page 3, lines 2-37; pages 4,5 * | 1 | |
| A | EP-A-0 072 945 (WEISS)<br>* Figures 1-11; pages 18-26 * | 1 | |
| A | US-A-4 449 653 (R.J. PIROLLI) | | **TECHNICAL FIELDS SEARCHED (Int. Cl.4)** |
| A | US-A-4 368 897 (C.B. BROWN) | | B 62 J |
| A | US-A-3 944 009 (NAGATOSHI KATAGIRI) | | |

The present search report has been drawn up for all claims

| Place of search THE HAGUE | Date of completion of the search 13-11-1985 | Examiner VANNESTE M.A.R. |
|---|---|---|